# EUROPÄISCHE PATENTSCHRIFT

(11) **EP 2 092 619 B1**
(45) Veröffentlichungstag und Bekanntmachung des Hinweises auf die Patenterteilung: **19.03.2014**
(21) Anmeldenummer: 07857631.1
(22) Anmeldetag: 14.12.2007
(51) Int. Cl.: H02B 1/14

(54) **PHASENTRENNEINRICHTUNG FÜR EIN MEHRPHASIGES SCHALTGERÄT**
PHASE SEPARATION DEVICE FOR A MULTIPHASE SWITCHGEAR
DISPOSITIF SÉPARATEUR DE PHASES POUR UN APPAREIL DE DISTRIBUTION POLYPHASÉ

(30) Priorität: 21.12.2006 DE 102006061926
(43) Veröffentlichungstag der Anmeldung: 26.08.2009
(73) Patentinhaber: Siemens Aktiengesellschaft, 80333 München (DE)
(72) Erfinder: ADELMANN, Marco, 63801 Kleinostheim (DE); GREINER-HUPP, Thomas, 63450 Hanau (DE); GROH, Hans-Michael, 63512 Hainburg (DE); WENGE, Brunhilde, 39167 Eichenbarleben (DE)
(86) Internationale Anmeldenummer: PCT/EP2007/063997
(87) Internationale Veröffentlichungsnummer: WO 2008/077825

(56) Entgegenhaltungen:
- US-A- 4 689 716
- US-A- 4 791 530
- US-A- 5 194 840

## Beschreibung

Die Erfindung betrifft eine Phasentrenneinrichtung für ein mehrphasiges Schaltgerät, insbesondere für eine gekapselte Schaltanlage, welche Phasentrenneinrichtung für jede Phase jeweils eine Trennhaube aufweist, die an einer Tragekonstruktion gehalten ist, wobei die Phasentrenneinrichtung plattenförmige Führungselemente aufweist, die zur Halterung an der Tragekonstruktion befestigbar ausgebildet sind, und die Trennhauben über Rastmittel zum Einrasten in den plattenförmigen Führungselementen verfügen und die plattenförmigen Führungselemente durch erste und zweite seitliche Führungselemente gebildet sind, wobei für jede der Phasentrennhauben mindestens ein erstes und mindestens ein zweites Führungselement vorgesehen ist.

Eine Phasentrenneinrichtung für einen Leistungsschalter als mehrphasiges Schaltgerät zum Einsatz in einer gekapselten Schaltanlage ist aus dem landläufigen Stand der Technik bekannt. Trennhauben für jede Phase des Schaltgerätes sind dabei an Kunststoffelementen, welche an einer Tragekonstruktion der Schaltanlage befestigt sind, in schlitzförmigen Aufnahmen der Kunststoffelemente gehalten. Derartige Phasentrenneinrichtungen zwischen einzelnen Phasen des Schaltgerätes sind dazu vorgesehen, einen Kurzschluss zwischen den einzelnen Phasen beispielsweise beim Trennen von Schaltkontakten des Schaltgerätes und dem dabei entstehenden Lichtbogen und dem anschließenden Löschvorgang sicher zu verhindern.

Eine Phasentrenneinrichtung der eingangs genannten Art ist aus der US 4,791,530 A bekannt.

Aufgabe der vorliegenden Erfindung ist es, eine Phasentrenneinrichtung der eingangs erwähnten Art auszubilden, welche bei einer einfachen Montage eine sichere Halterung der Phasentrenneinrichtung an der Tragekonstruktion ermöglicht.

Erfindungsgemäß gelöst wird diese Aufgabe bei einer Phasentrenneinrichtung der eingangs erwähnten Art dadurch, dass zweite Führungselemente jeweils derart ausgebildet und an der Tragekonstruktion derart befestigbar sind, dass jeweils ein freies Ende der zweiten Führungselementes aus einer Normalposition in eine ausgelegte Position reversibel biegbar überführbar ist und über mindestens eine zweite Rastausnehmung verfügt.

Mit einer derartigen Phasentrenneinrichtung ist einerseits eine einfache Montage der Phasentrenneinrichtung gewährleistet, weil die Trennhauben in die Führungselemente einfach eingeschoben werden und mit ihren Rastmitteln darin einrasten. Durch das Einrasten ist andererseits eine sichere Halterung der Phasentrenneinrichtung an der Tragekonstruktion gewährleistet, weil durch das Einrasten der Rückhalt der Trennhauben gewährleistet ist, also mit anderen Worten ein unbeabsichtigtes Herauslösen der Trennhauben aus den Führungselementen wirksam verhindert ist, wobei derartige zweite Führungselemente eine besonders einfache Montage der Phasentrenneinrichtung ermöglichen, weil über die reversible Biegbarkeit der zweiten Führungselemente ein Einschieben unter Überführen des zweiten Führungselementes aus seiner Normalposition in die ausgelenkte Position und anschließendes Einrasten der Trennhaube in die zweite Rastausnehmung des zweiten Führungselementes unter Zurückfedern des jeweiligen zweiten Führungselementes ermöglicht ist.

In weiterer Ausgestaltung der Erfindung sind die ersten Führungselemente jeweils durch eine Platte mit mindestens einer ersten Rastausnehmung gebildet.

In einer weiteren bevorzugten Ausführungsform verfügen die Trennhauben jeweils an einer ersten Seite einer ersten und einer zweiten Wand über mindestens eine Einrastausnehmung zum Einrasten in der ersten Rastausnehmung der ersten Führungselemente und an einer zweiten Seite der ersten und der zweiten Wand über eine Anfahrschräge zum Auslenken des freien Endes der zweiten Führungselemente sowie über eine zweite Einrastausnehmung zum Einrasten in der zweiten Rastausnehmung der zweiten Führungselemente.

In weiterer Ausgestaltung der Erfindung ist für jeweils mindestens eine Trennhaube ein an der Tragekonstruktion befestigbar ausgebildeter Stützrahmen vorgesehen. Mit einem derartigen Stützrahmen ist weiterhin eine vorteilhafte Montage der Trennhauben an der Tragekonstruktion gewährleistet, weil mittels des Stützrahmens ein Herauslösen der Trennhauben aus den Führungselementen durch die Gewichtskraft der Trennhauben weiterhin verhindert wird.

In weiterer Ausgestaltung der Erfindung sind die Führungselemente, die Trennhauben und die Stützrahmen aus Polypropylen ausgebildet. Polypropylen ist ein besonders vorteilhaftes Material zur Ausbildung von Phasentrenneinrichtungen, weil es einerseits über die notwendige mechanische Stabilität verfügt, und andererseits einen Phasenkurzschluss zwischen einzelnen Phasen des Schaltgerätes wirksam verhindert.

Die Erfindung wird im Folgenden anhand der Zeichnung und eines Ausführungsbeispiels mit Bezug auf die beiliegenden Figuren näher erläutert. Es zeigen:
- Figur 1: eine perspektivische Ansicht eines mehrphasigen Schaltgerätes mit einem Ausführungsbeispiel einer erfindungsgemäßen Phasentrenneinrichtung,
- Figur 2: eine perspektivische Ansicht einer Tragekonstruktion mit einem Ausführungsbeispiel von Führungselementen der erfindungsgemäßen Phasentrenneinrichtung,
- Figur 3: eine perspektivische Ansicht einer Trennhaube des Ausführungsbeispiels der erfindungsgemäßen Phasentrenneinrichtung,
- Figur 4: eine Draufsicht auf eine Trennhaube des Ausführungsbeispiels der erfindungsgemäßen Phasentrenneinrichtung,
- Figur 5: eine Darstellung eines ersten Führungselementes des Ausführungsbeispiels der erfindungsgemäßen Phasentrenneinrichtung,
- Figur 6: eine perspektivische Ansicht eines zweiten Führungselementes des Ausführungsbeispiels der erfindungsgemäßen Phasentrenneinrichtung und
- Figur 7: eine perspektivische Ansicht eines Stützrahmens des Ausführungsbeispiels der erfindungsgemäßen Phasentrenneinrichtung.

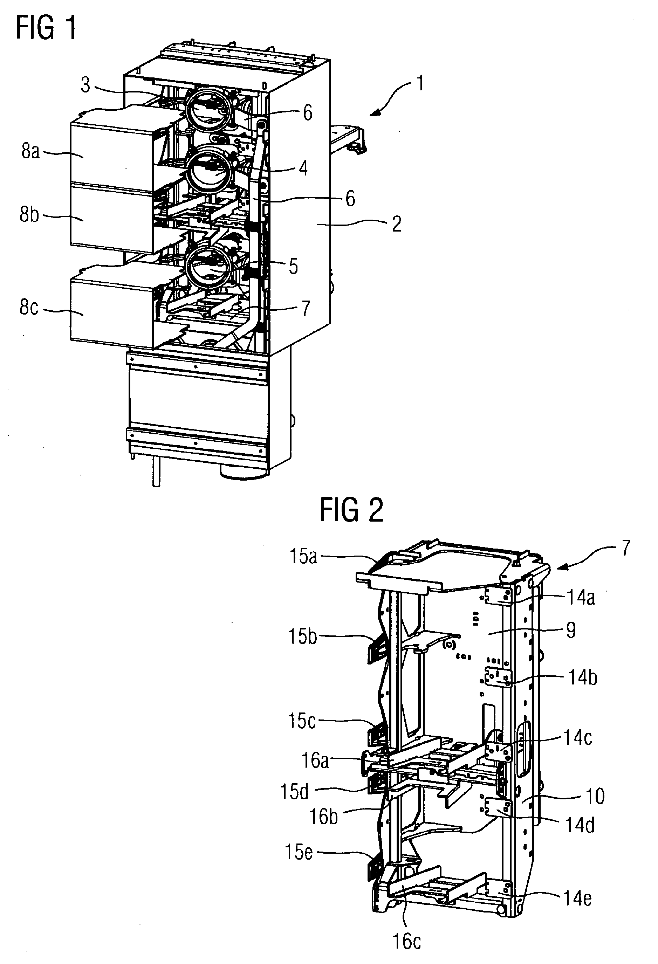

Figur 1 zeigt eine perspektivische Ansicht eines dreipoligen Schaltgerätes 1, welches in einem gekapselten Behälter 2 angeordnet ist. In der Figur 1 ist der gekapselte Behälter 2 auf seiner Frontseite geöffnet in einem Montagezustand dargestellt. In einem eingebauten Zustand in einer Schaltanlage ist der Behälter 2 mit Isoliergas, beispielsweise SF6, gefüllt und frontseitig gasdicht verschlossen. Das Schaltgerät 1 mit seinen Polen 3, 4, 5 ist mittels einer Stromschienenanordnung 6 mit figürlich nicht ersichtlichen Anschlussmitteln zur Verbindung mit Sammelschienen bzw. Kabelanschlüssen einer figürlich nicht dargestellten Schaltanlage verbunden. Das Schaltgerät 1 ist weiterhin mittels einer Tragekonstruktion 7 in dem gekapselten Behälter gehalten. Trennhauben 8a, 8b, 8c sind zur Trennung der Phasen bzw. der Pole 3, 4, 5 voneinander vorgesehen, so dass ein bei einem Trennvorgang des Schaltgerätes 1 entstehender Lichtbogen nicht zu einem Phasenkurzschluss zwischen den Polen 3, 4 und 5 führen kann. In der Figur 1 sind die Trennhauben 8a, 8b, 8c in einer noch nicht eingebauten Position dargestellt. Den Schalterpolen 3, 4 und 5 zugeordnete Sensoren 11, 12 und 13 sind mit der Stromschienenanordnung 6 des Schaltgerätes 1 verbunden

Figur 2 zeigt eine perspektivische Ansicht der Tragekonstruktion 7 für das Schaltgerät 1, welche eine Montagewand 9 sowie Seitenteile 10 umfasst, welche fest miteinander verbunden sind. Erste plattenförmige Führungselemente 14a, 14b, 14c, 14d, 14e sind an einer Seite der Tragekonstruktion 7 befestigt, zweite plattenartige Führungselemente 15a, 15b, 15c, 15d, 15e an einer anderen Seite der Tragekonstruktion ebenfalls befestigt. Stützrahmen 16a, 16b, 16c sind mit der Tragekonstruktion 7ebenfalls verbunden.

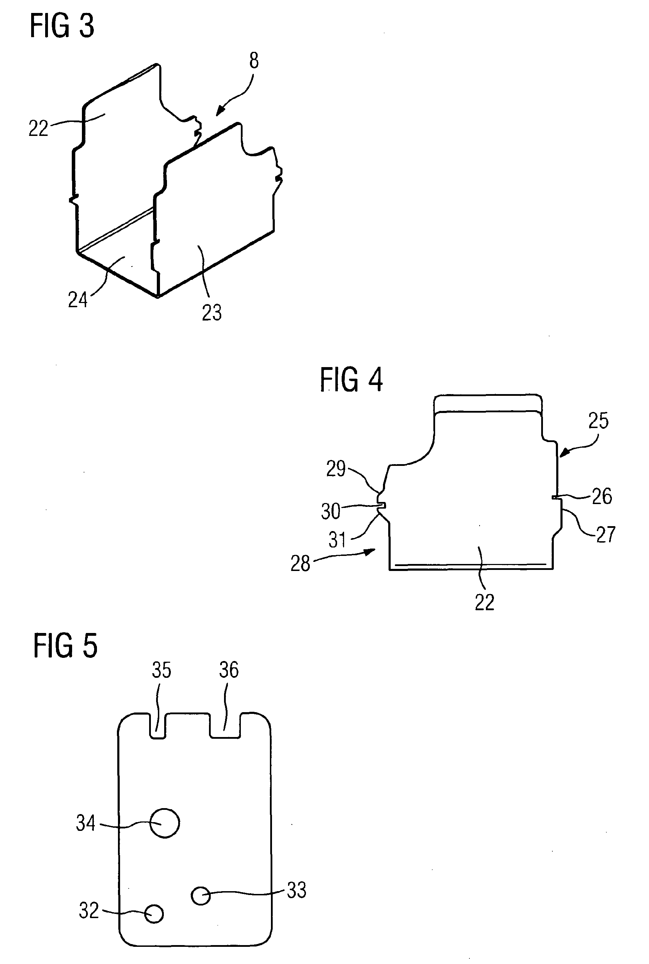

Figur 3 zeigt eine perspektivische Ansicht einer Trennhaube 8, wie sie in der Figur 1 mit 8a, 8b, 8c bezeichnet ist. Die Trennhaube 8 weist eine U-förmige Gestalt mit einer ersten Wand 22 und einer zweiten Wand 23 und einem Verbindungsbereich 24 auf.

Figur 4 zeigt eine Draufsicht auf die erste Wand 22 der Trennhaube 8 der Figur 3, wobei an einer ersten Seite 25 eine erste Einrastausnehmung 26 und ein Anschlag 27 und an einer zweiten Seite 28 der Trennhaube eine Anfahrschräge 29, eine zweite Rastausnehmung 30 und ein zweiter Anschlag 31 ausgebildet sind.

In Figur 5 ist ein erstes Führungselement 14 dargestellt, wie es in der Figur 2 mit den Bezugszeichen 14a, 14b, 14c, 14d, 14e bezeichnet ist. Das erste Führungselement weist Befestigungsbohrungen 32, 33 und 34 auf, durch welche das erste Führungselement 14 an der Tragekonstruktion 7 befestigbar ausgebildet ist. Das erste Führungselement 14 weist ferner eine erste Rastausnehmung 35 sowie eine weitere Rastausnehmung 36 auf, wobei die erste Rastausnehmung 35 eine Dicke entsprechend der Wandstärke der Trennhaube und die weitere Rastausnehmung 36 eine Dicke entsprechend zwei Wandstärken der Trennhauben aufweisen.

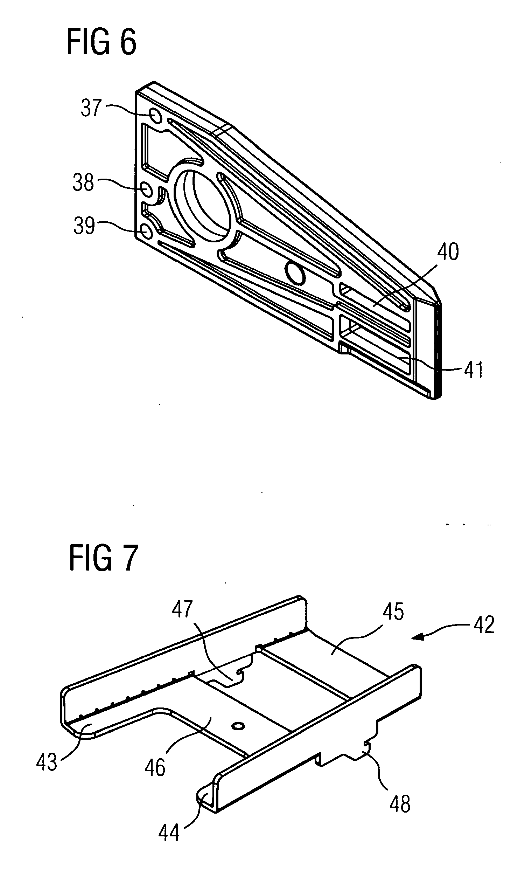

Figur 6 zeigt eine perspektivische Ansicht eines zweiten Führungselementes 15, wie es in der Figur 2 mit 15a, 15b, 15c, 15d, 15e bezeichnet ist. Das zweite Führungselement 15 umfasst Befestigungsbohrungen 37, 38 und 39 sowie eine zweite Rastausnehmung 40 und eine weitere zweite Rastausnehmung 41, wobei die zweite Rastausnehmung 40 eine Dicke entsprechend einer Wandstärke einer Trennhaube 8 und die weitere zweite Rastausnehmung 41 eine Dicke entsprechend zwei Wandstärken der Trennhauben 8 aufweisen.

Figur 7 zeigt eine perspektivische Ansicht eines Stützrahmens 16, wie er in der Figur 1 mit 16a, 16b, 16c bezeichnet ist. Der Stützrahmen 16 weist zwei Schenkel 43 und 44 auf, welche mittels Verbindungsstegen 45 und 46 miteinander verbunden sind. An den Verbindungsstegen 45 und 46 jeweils angeordnet sind Rastnasen 47 und 48, mit welchen der Stützrahmen 16 in der Tragekonstruktion 7 befestigbar ausgebildet ist.

Zum Zusammenbau der Phasentrenneinrichtung werden die ersten Führungselemente 14a, 14b, 14c, 14d, 14e an der Tragekonstruktion 7 mittels ihrer Befestigungsbohrungen verschraubt, ebenso die zweiten Führungselemente 15a, 15b, 15c, 15d, 15e. Wie aus der Figur 1 ersichtlich, sind dabei die Pole 3 und 4 des Schaltgerätes 1 in einem geringeren Abstand zueinander angeordnet als der Abstand zwischen den Polen 4 und 5. Die Trennhauben 8a und 8b liegen aneinander an, wohingegen die Trennhaube 8c von den anderen beiden Trennhauben 8a und 8b beabstandet anbringbar ist. Dazu sind für diese Trennhauben 8a und 8b insgesamt jeweils drei erste und drei zweite Führungselemente 14a, 14b, 14c und 15a, 15b, 15c vorgesehen, wobei die jeweils mittleren ersten und zweiten Führungselemente 14b und 15b derart in einer Höhe an der Tragekonstruktion 7 befestigt, dass ihre jeweils weitere Rastausnehmung mit der Dicke entsprechend der doppelten Wandstärke zur Aufnahme und zum Einrasten der aneinander liegenden Wände der Hauben 8a und 8b angeordnet sind.

Die zweiten Führungselemente 15a, 15b, 15c, 15d, 15e sind dabei derart seitlich an der Tragekonstruktion befestigt, dass sie an einem Ende mittels ihrer Befestigungsbohrungen an der Tragekonstruktion verschraubt sind und sich ihr anderes freies Ende nach vorne erstreckt und reversibel biegbar aus einer Normalposition in eine ausgelenkte Position überführbar ist.

Die Montage der Trennhauben 8a, 8b, 8c wird exemplarisch am Beispiel der Trennhaube 8c erläutert, die Montage der weiteren Trennhauben 8a und 8b erfolgt analog dazu. Die Trennhaube 8c wird in das Schaltgerät 1 zwischen die Pole 4 und 5 eingeführt, wobei durch die Anfahrschrägen 29 der Trennhaube 8c die freien Enden der zweiten Führungselemente 15d und 15e dabei aus ihrer Normalposition ausgelenkt werden. Bei Erreichen einer Einbaustellung, in der der Anschlag 31 der Trennhaube 8c ein weiteres Einführen verhindert, werden die freien Enden der zweiten Führungselemente 15d und 15e in ihre Normalposition zurück überführt, wobei die zweiten Einrastausnehmungen der Haube 8c in die jeweiligen zweiten Rastausnehmungen der zweiten Führungselemente 15d und 15e einrasten und mit diesen verriegelt sind. In dieser Position sind ebenfalls die ersten Einrastausnehmungen der Trennhaube 8c mit den ersten Rastausnehmungen der ersten Führungselemente 14d und 14e eingerastet und verriegelt.

## Patentansprüche

1. Phasentrenneinrichtung für ein mehrphasiges Schaltgerät (1), insbesondere für eine gekapselte Schaltanlage, welche Phasentrenneinrichtung für jede Phase (3 ,4 ,5) jeweils eine Trennhaube (8a, 8b, 8c) aufweist, die an einer Tragekonstruktion (7) gehalten ist, wobei
die Phasentrenneinrichtung plattenförmige Führungselemente (14a, 14b, 14c, 14d, 14e, 15a, 15b, 15c, 15d, 15e) aufweist, die zur Halterung an der Tragekonstruktion (7) befestigbar ausgebildet sind, und die Trennhauben (8a, 8b, 8c) über Rastmittel (26, 27, 29, 30) zum Einrasten in den plattenförmigen Führungselementen (14a, 14b, 14c, 14d, 14e, 15a, 15b, 15c, 15d, 15e) verfügen und die plattenförmigen Führungselemente (14a, 14b, 14c, 14d, 14e, 15a, 15b, 15c, 15d, 15e) durch erste und zweite seitliche Führungselemente (14a, 14b, 14c, 14d, 14e, 15a, 15b, 15c, 15d, 15e) gebildet sind, wobei für jede der Phasentrennhauben (8a, 8b, 8c) mindestens ein erstes und mindestens ein zweites Führungselement vorgesehen ist,
**dadurch gekennzeichnet**, d a s s
die zweiten Führungselemente (15a, 15b, 15c, 15d, 15e) jeweils derart ausgebildet und an der Tragekonstruktion (7) derart befestigbar sind, dass jeweils ein freies Ende der zweiten Führungselemente (15a, 15b, 15c, 15d, 15e) aus einer Normalposition in eine ausgelenkte Position reversibel biegbar überführbar ist und über mindestens eine zweite Rastausnehmung (40, 41) verfügt

2. Phasentrenneinrichtung nach Anspruch 1,
**dadurch gekennzeichnet, dass**
die ersten Führungselemente (14a, 14b, 14c, 14d, 14e) jeweils durch eine Platte mit mindestens einer ersten Rastausnehmung (35, 36) gebildet sind.

3. Phasentrenneinrichtung nach Anspruch 1 oder 2,
**dadurch gekennzeichnet, dass**
die Trennhauben (8a, 8b, 8c) jeweils an einer ersten Seite (25) einer ersten und einer zweiten Wand (22, 23) über mindestens eine Einrastausnehmung (26) zum Einrasten in der ersten Rastausnehmung (35) der ersten Führungselemente (14a, 14b, 14c, 14d, 14e) und an einer zweiten Seite (28) der ersten und der zweiten Wand (22, 23) über eine Anfahrschräge (29) zum Auslenken des freien Endes der zweiten Führungselemente (15a, 15b, 15c, 15d, 15e) sowie über eine zweite Einrastausnehmung (30) zum Einrasten in der zweiten Rastausnehmung der zweiten Führungselemente (15a, 15b, 15c, 15d, 15e) verfügen.

4. Phasentrenneinrichtung nach einem der vorangehenden Ansprüche,
**dadurch gekennzeichnet, dass**
für jeweils mindestens eine Trennhaube (8a ,8b, 8c) ein an der Tragekonstruktion (7) befestigbar ausgebildeter Stützrahmen (16a, 16b, 16c) vorgesehen ist.

5. Phasentrenneinrichtung nach einem der vorangehenden Ansprüche,
**dadurch gekennzeichnet, dass**
die Führungselemente und die Trennhauben aus Polypropylen ausgebildet sind.

6. Phasentrenneinrichtung nach einem der Ansprüche 4 oder 5,
**dadurch gekennzeichnet, dass**
die Stützrahmen (16a, 16b, 16c) aus Polypropylen ausgebildet sind.

## Claims

1. Phase separation device for a multi-phase switchgear (1), in particular for an encapsulated switching system, which phase separation device has a separation cover (8a, 8b, 8c) for each phase (3, 4, 5) respectively, said separation cover being held on a supporting structure (7), wherein
the phase separation device has plate-type guide elements (14a, 14b, 14c, 14d, 14e, 15a, 15b, 15c, 15d, 15e), which are embodied so as to be fasteneable to the supporting structure (7) for holding purposes and the separation covers (8a, 8b, 8c) have latching means (26, 27, 28, 29) for engaging in the plate-type guide elements (14a, 14b, 14c, 14d, 14e, 15a, 15b, 15c, 15d, 15e) and the plate-type guide elements (14a, 14b, 14c, 14d, 14e, 15a, 15b, 15c, 15d, 15e) are formed by first and second lateral guide elements (14a, 14b, 14c, 14d, 14e, 15a, 15b, 15c, 15d, 15e), wherein at least one first and at least one second guide element is provided for each of the phase separation covers (8a, 8b, 8c),
**characterised in that**
the second guide elements (15a, 15b, 15c, 15d, 15e) are each embodied and fasteneable to the supporting structure (7) such that a free end of the second guide element (15a, 15b, 15c, 15d, 15e) can be changed in a reversibly bendable manner in each instance from a normal position into a deflected position and has at least one second latching cutout (40, 41).

2. Phase separation device according to claim 1,
**characterised in that**
the first guide elements (14a, 14b, 14c, 14d, 14e) are each formed by a plate having at least one first latching cutout (35, 36).

3. Phase separation device according to claim 1 or 2,
**characterised in that**
the separation covers (8a, 8b, 8c), respectively on a first side (25) of a first and a second wall (22, 23), have at least one latching cutout (26) for engaging in the first latching cutout (35) of the first guide elements (14a, 14b, 14c, 14d, 14e) and on a second side (28) of the first and the second wall (22, 23) have a chamfered edge (29) for deflecting the free end of the second guide element (15a, 15b, 15c, 15d, 15e) and a second latching cutout (30) for engaging in the second latching cutout of the second guide elements (15a, 15b, 15c, 15d, 15e).

4. Phase separation device according to one of the preceding claims,
**characterised in that**
a supporting frame (16a, 16b, 16c) embodied so as to be fastenable to the supporting structure (7) is provided for at least one separation cover (8a, 8b, 8c) respectively.

5. Phase separation device according to one of the preceding claims,
**characterised in that**
the guide elements and the separation covers are embodied from polypropylene.

6. Phase separation device according to one of claims 4 or 5,
**characterised in that** the supporting frames (16a, 16b, 16c) are embodied from polypropylene.

## Revendications

1. Dispositif de séparation de phases pour un appareil ( 1 ) de distribution polyphasé, notamment pour une installation de distribution blindée, lequel dispositif de séparation de phases a, pour chaque phase ( 3, 4, 5 ) respectivement, un capot ( 8a, 8b, 8c ) de séparation, qui est retenu à une construction ( 7 ) portante, dans lequel
le dispositif de séparation de phases a des éléments ( 14a, 14b, 14c, 14d, 14e, 15a, 15b, 15c, 15d, 15e ) de guidage en forme de plaques, qui, pour la retenue à la construction ( 7 ) portante, sont constitués de manière à pouvoir être fixés et les capots ( 8a, 8b, 8c ) de séparation disposent de moyens ( 26, 27, 29, 30 ) d'encliquetage pour l'encliquetage dans les éléments ( 14a, 14b, 14c, 14d, 14e, 15a, 15b, 15c, 15d, 15e ) de guidage en forme de plaques et les éléments ( 14a, 14b, 14c, 14d, 14e, 15a, 15b, 15c, 15d, 15e ) de guidage en forme de plaques sont formés par des premiers et deuxièmes éléments ( 14a, 14b, 14c, 14d, 14e, 15a, 15b, 15c, 15d, 15e ) de guidage latéraux, dans lequel, pour chacun des capots ( 8a, 8b, 8c ) de séparation de phases, il est prévu au moins un premier et au moins un deuxième éléments de guidage,
**caractérisé en ce que**
les deuxièmes éléments ( 15a, 15b, 15c, 15d, 15e ) de guidage sont constitués respectivement et peuvent être fixés à la construction ( 7 ) portante, de manière à ce que respectivement une extrémité libre des deuxièmes éléments ( 15a, 15b, 15c, 15d, 15e ) de guidage puissent passer, avec possibilité de fléchir d'une façon réversible, d'une position normale à une position d'excursion et disposent d'au moins un deuxième évidement ( 40, 41 ) d'encliquetage.

2. Dispositif de séparation de phases suivant la revendication 1,
**caractérisé en ce que**
les premiers éléments ( 14a, 14b, 14c, 14d, 14e ) de guidage sont formés respectivement par une plaque ayant au moins un premier évidement ( 35, 36 ) d'encliquetage.

3. Dispositif de séparation de phases suivant la revendication 1 ou 2,
**caractérisé en ce que**
les capots ( 8a, 8b, 8c ) de séparation disposent d'un premier côté ( 25 ) d'une première et d'une deuxième parois ( 22, 23 ) d'au moins un évidement ( 26 ) d'encliquetage, pour l'encliquetage dans le premier évidement ( 35 ) d'encliquetage des premiers éléments ( 14a, 14b, 14c, 14d, 14e ) de guidage, et d'un deuxième côté ( 28 ) de la première et de la deuxième parois ( 22, 23 ) d'un biseau ( 29 ) d'attaque, pour l'excursion de l'extrémité libre du deuxième élément ( 15a, 15b, 15c, 15d, 15e ) de guidage, ainsi que d'un deuxième évidement ( 30 ) d'encliquetage pour l'encliquetage dans le deuxième évidement d'encliquetage des deuxièmes éléments ( 15a, 15b, 15c, 15d, 15e ) de guidage.

4. Dispositif de séparation de phases suivant l'une des revendications précédentes,
**caractérisé en ce que**
pour respectivement au moins un capot ( 8a, 8b, 8c ) de séparation, il est prévu un cadre ( 16a, 16b, 16c ) d'appui constitué de manière à pouvoir être fixé à la construction ( 7 ) portante.

5. Dispositif de séparation de phases suivant l'une des revendications précédentes,
**caractérisé en ce que**
les éléments de guidage et les capots de séparation sont en polypropylène.

6. Dispositif de séparation de phases suivant la revendication 4 ou 5,
**caractérisé en ce que**
les cadres ( 16a, 16b, 16c ) d'appui sont en polypropylène.
